# EUROPEAN PATENT SPECIFICATION

(11) **EP 4 027 452 B1**
(45) Date of publication and mention of the grant of the patent: **29.10.2025**
(21) Application number: 22150322.0
(22) Date of filing: 05.01.2022
(51) Int. Cl.: H01Q 1/28, H01Q 7/00, H01Q 9/27, H01Q 21/24, G01S 3/46

(54) **MULTI-BAND INTEGRATED ANTENNA ARRAYS FOR VERTICAL LIFT AIRCRAFT AND MULTI-POLARIZATION NVIS**
MEHRBANDIGE INTEGRIERTE ANTENNENARRAYS FÜR FLUGZEUGE MIT VERTIKALEM AUFTRIEB UND NVIS MIT MULTIPOLARISATION
RÉSEAUX D'ANTENNES MULTI-BANDES INTÉGRÉS POUR AÉRONEF À ÉLÉVATION VERTICALE ET NVIS MULTI-POLARISATION

(30) Priority: 08.01.2021 US 202117144623; 27.01.2021 US 202117159781; 27.01.2021 US 202117159683
(43) Date of publication of application: 13.07.2022
(73) Proprietor: Rockwell Collins, Inc., Cedar Rapids, IA 52498 (US)
(72) Inventor: GRAF, Joseph T., Center Point, IA (US); WEST, James B., Cedar Rapids, 52404 (US)
(74) Representative: Dehns

(56) References cited:
- EP-A1- 0 683 399
- US-A- 5 032 844
- US-A- 5 315 309
- US-A- 5 646 633
- US-A- 6 061 022
- US-A1- 2003 227 422
- US-A1- 2005 007 294
- US-A1- 2006 290 581
- US-A1- 2014 320 356
- US-A1- 2019 341 679

## Description

### BACKGROUND

In many applications, such as military applications, it is desirable to have multiple redundant options for beyond-line-of-sight communication. Traditionally, such communication is primarily via SATCOM and an alternative, high frequency (HF) near vertical incident skywave (NVIS) system capable of beyond-line-of-site communication via interaction with the ionosphere when SATCOM is unavailable. HF antennas are large and there is a critical need to eliminate drag and antenna count in limited real estate platforms, such as attack helicopters, and also augment beyond-line-of-sight communication capabilities for contested environments. Furthermore, unpredictable environmental variables are problematic for NVIS because a signal generated to accommodate one set of environmental characteristics may be ill-suited to a dynamic environment. Furthermore, it is difficult or impossible to anticipate the dynamic environment and maximize connectivity. US 5 032 844 A and EP 0 683 399 A1 relate to measurement systems for determining the direction of an incoming radio signal using HF antennas. US 2019/341679 A1 and US 5 315 309 A disclose the integration of HF antennas to an aircraft. US 2006/290581 A1 discloses an antenna for the reception of NVIS signals comprising an RHCP and an LHCP polarization channels. US 2003/227422 A1 discloses spiral antennas for the reception of NVIS signal in a helicopter. US 2005/007294 A1 discloses meander loop antenna structures for the reception of NVIS signals. US 6 061 022 A discloses a conformal direction finding arrangement integrated to an aircraft and using spiral antennas. US 5 646 633 A discloses a plurality of patch antenna arrays integrated on different aircraft body panels. US 2014/320356 A1 discloses nested loop antennas integrated on an aircraft body panel.

Some HF antennas may be incorporated into or closely integrated with the body panels of such platforms, but that incorporation consumes substantial surface area, leaving limited surface area to incorporate other, higher frequency antennas.

### SUMMARY

According to a first aspect invention, a system of antennas according to claim 1 is provided. According to a second aspect of the invention, a system according to claim 12 is provided.

In one aspect, embodiments of the inventive concepts disclosed herein are directed to a system of spiral antennas incorporated into aircraft body panels. The spiral antennas may be slot or printed material antennas, or cavity backed for unidirectional communication.

In a further aspect, antennas are configured for orthogonal polarization such that NVIS may be operable no matter the state of the ionosphere.

In a further aspect, antennas are disposed on substantially perpendicular body panels so that, when operated in concert, the resulting signals have opposite polarization.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a side environmental view of embedded antennas according to an exemplary embodiment;
FIG. 2 shows a top view of a body panel with embedded antennas according to an exemplary embodiment;
FIG. 3 shows a side environmental view of embedded antennas according to an exemplary embodiment;
FIG. 4 shows a top environmental view of embedded antennas according to an exemplary embodiment;
FIG. 5A shows a top view of a body panel with embedded antennas according to an exemplary embodiment;
FIG. 5B shows a top view of a body panel with embedded antennas according to an exemplary embodiment;
FIG. 5C shows a top view of a body panel with embedded antennas according to an exemplary embodiment;
FIG. 5D shows a top view of a body panel with embedded antennas according to an exemplary embodiment;
FIG. 6 shows a top view of body panels with embedded antennas according to an exemplary embodiment;
FIG. 7A shows diagrams of radiation patterns produced limited element arrays disposed on aircraft panels according to an exemplary embodiment;
FIG. 7B shows diagrams of radiation patterns produced limited element arrays disposed on aircraft panels according to an exemplary embodiment;
FIG. 7C shows diagrams of radiation patterns produced limited element arrays disposed on aircraft panels according to an exemplary embodiment;
FIG. 8A shows a spiral antenna element according to an exemplary embodiment;
FIG. 8B shows a spiral antenna element according to an exemplary embodiment;
FIG. 9A shows a top view of an aircraft panel according to an exemplary embodiment;
FIG. 9B shows a top view of an aircraft panel according to an exemplary embodiment;
FIG. 10 shows a top view of aircraft panels according to an exemplary embodiment;
FIG. 11 shows a side view of an aircraft panel according to an exemplary embodiment;
FIG. 12 shows a top view of an aircraft according to an exemplary embodiment;
FIG. 13 shows a top view of aircraft panels according to an exemplary embodiment;
FIG. 14 shows a block diagram of a system according to an exemplary embodiment;
FIG. 15A shows a side view of an aircraft according to an exemplary embodiment;
FIG. 15B shows a top view of an aircraft according to an exemplary embodiment;
FIG. 16 shows a detail, cross-sectional view of a panel with an embedded HF antenna according to an exemplary embodiment;
FIG. 17 shows a detail view of an aircraft panel according to an exemplary embodiment;
FIG. 18 shows a detail view of an aircraft panel according to an exemplary embodiment;
FIG. 19 shows a detail view of an aircraft panel according to an exemplary embodiment;
FIG. 20 shows a block diagram of a system useful for implementing exemplary embodiments.

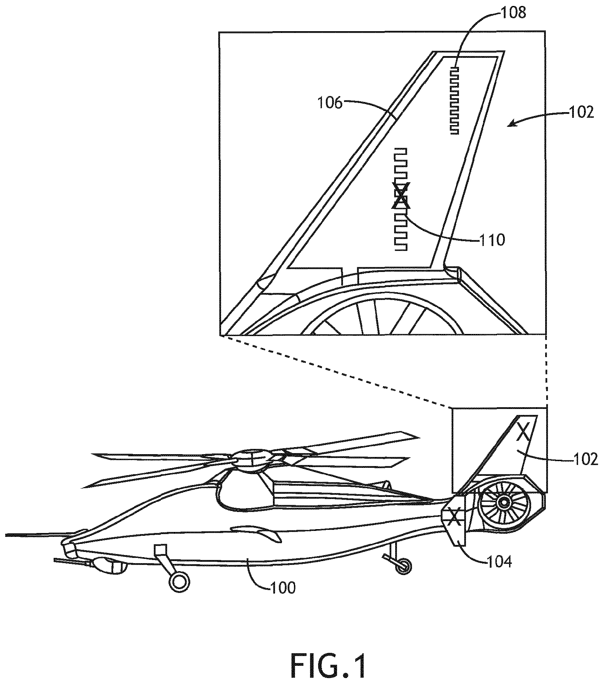

The embodiments according to the invention are illustrated in figures 1, 2, 9B and 11. The embodiments illustrated in the other figures do not comprise all of the technical features required by the independent claims, but are useful for the understanding of the invention.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system of antennas, each having disparity operating frequencies, incorporated into the same aircraft body panels. HF antennas define loops with large internal areas; additional higher frequency antennas are disposed within that large internal area. Antennas operating in the same frequency range, disposed on different parallel surfaces are operated in concert as a steerable array.

Referring to FIG. 1, a side environmental view of embedded antennas according to an exemplary embodiment is shown. An aircraft 100 having a plurality of body panels 102, 104 defining substantially parallel surfaces of the aircraft 100. In at least one embodiment, the aircraft 100 may operate multiple data communication systems, each requiring an antenna 106, 108, 110 configured for operating in a specific frequency range. An HF antenna 106 may be disposed in or on a body panel 102, 104 for HF specific functions such NVIS; such HF antennas 106 are generally large and may define a large space in the corresponding body panel 102, 104. Within the large space, higher frequency antennas 108, 110 are disposed; for example, very-high frequency (VHF) antennas 106 and ultra-high frequency (UHF) antennas 110 may be disposed in the space. VHF antennas 108 and UHF antennas 110 are unlikely to cause coupling that would interfere with the function of the HF antenna 106 or each other, therefore close proximity in the same body panel 102, 104 is not a hinderance. It may be appreciated that in some cases, antennas 106, 108, 110 may have operating frequencies that are likely to cause coupling; such combinations of antennas 106, 108, 110 would not be optimal, but may be possible where on-board systems could insure that antennas 106, 108, 110 on the same body panel 102, 104 would not be operated simultaneously.

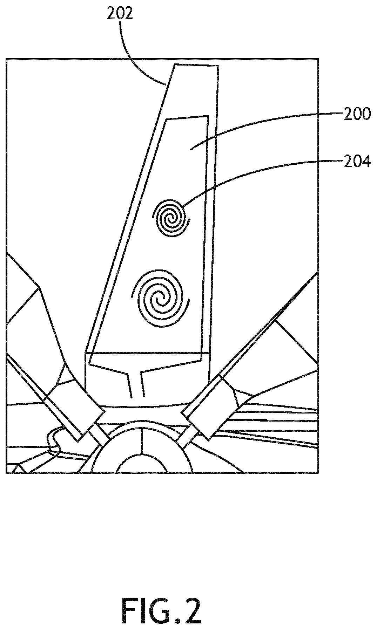

Referring to FIG. 2, a top view of a body panel with embedded antennas according to an exemplary embodiment is shown. In at last one embodiment, horizontal aircraft surfaces 200 may include an HF antenna 202 encompassing a large area, and one or more spiral antennas 204 disposed within the large area. The spiral antennas 204 may be slot or printed material antennas, or cavity backed for unidirectional communication. In at least one embodiment, a slot spiral antenna 204 that is not cavity backed may be configured for bi-directional communication; in the case of a horizontal surface, both upward and downward.

In at least one embodiment, spiral antennas 204 disposed in or on parallel surfaces may be operated in concert as an array for beam steering.

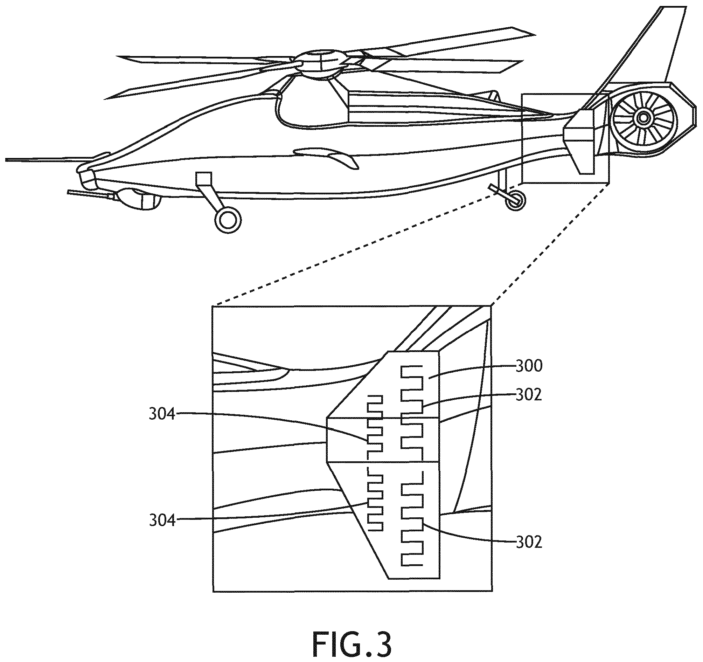

Referring to FIG. 3, a side environmental view of embedded antennas 302, 304 according to an exemplary embodiment is shown. In at least one embodiment, vertical surfaces 300 are embedded with a plurality of antennas 302, 304 configured to operate in disparate frequency ranges. In at least one embodiment, antennas 302, 304 configured for a specific frequency range disposed on a surface 300 may operate in concert with other antennas 302, 304 on that surface and other parallel surfaces as an array to allow for beam steering.

In at least one embodiment, the vertical surfaces 300 comprise small vertical stabilizers of an aircraft. A first set of antennas 302 may be configured for VHF operation while a second set of antennas 304 may be configured for UHF operation. Each of the VHF antennas 302 and UHF antennas 304 may be loop antennas, meandered dipole antennas, slot antennas, bi-directional spiral antennas, etc., or some combination thereof.

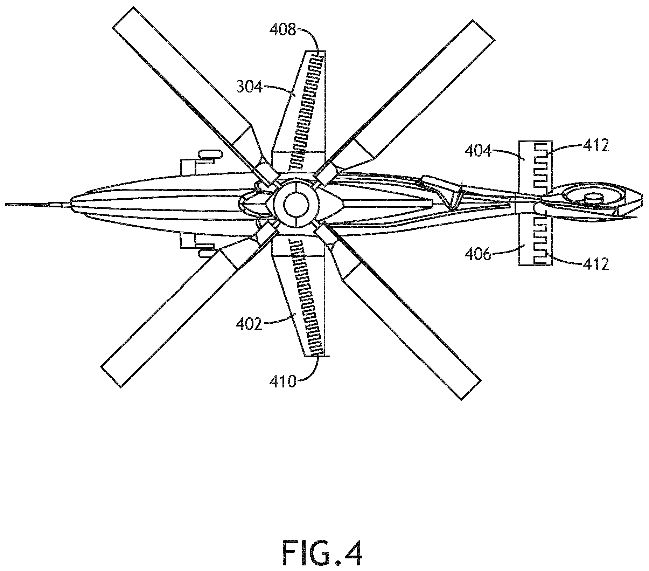

Referring to FIG. 4, a top environmental view of embedded antennas 408, 410, 412, 414 according to an exemplary embodiment is shown. In at least one embodiment, aircraft surfaces 400, 402, 404, 406 may be dedicated to specific set of antennas 408, 410, 412, 414 to minimize mutual coupling.

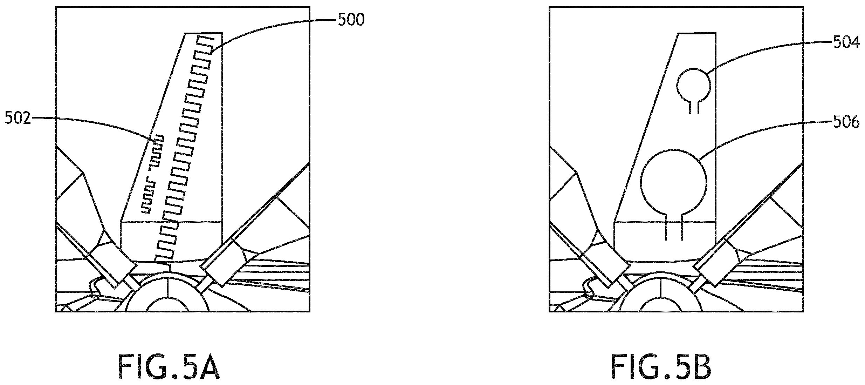

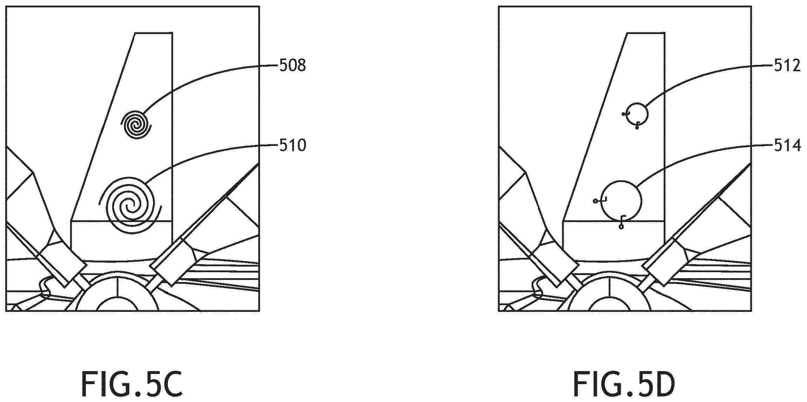

Referring to FIGS. 5A-5D, top views of body panels with embedded antennas according to an exemplary embodiment are shown. In at least one embodiment, such as in FIG. 5A, meandered dipole antennas 500, 502 configured to operate in different frequency ranges are disposed in or on a horizontal surface for horizontal polarization; for example, a first set of antennas 500 may be configured for VHF frequencies with a horizontal polarization while a second set of antennas 502 may be configured for UHF frequencies with a horizontal polarization. In at least one embodiment, such as in FIG. 5B, loop antennas 504, 506 are configured to operate in VHF and UHF frequency ranges with vertical polarization. In at least one embodiment, such as in FIG. 5C, bi-directional spiral antennas 508, 510 are configured to operate in VHF and UHF frequency ranges with vertical polarization. In at least one embodiment, such as in FIG. 5D, annular slot antennas 512, 514 are configured to operate in VHF and UHF frequency ranges with vertical polarization. In at least one embodiment, annular slot antennas 512, 514 may have a ground and produce unidirectional radiation patterns. Alternatively, annular slot antennas 512, 514 may have no ground and produce bi-directional radiation patterns.

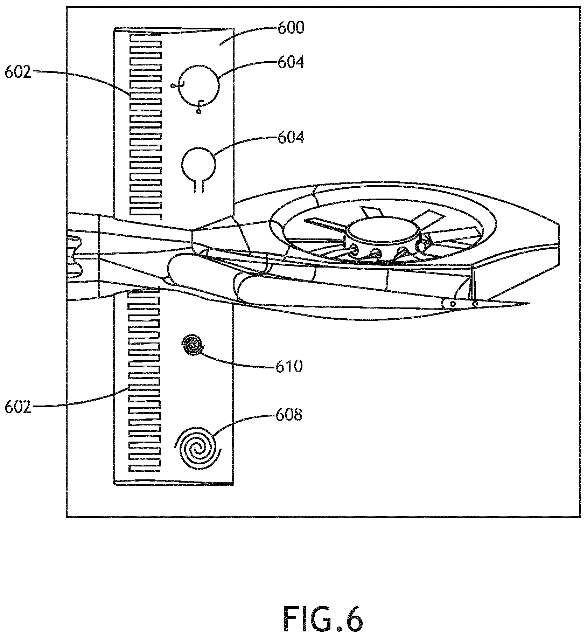

Referring to FIG. 6, a top view of body panels with tandem embedded antennas according to an exemplary embodiment is shown. Different classes of antennas 602, 604, 606, 608, 610 may be disposed in substantially parallel surfaces 600. In at least one embodiment, a first class of antenna elements 602 may be disposed across a plurality of substantially parallel surfaces 600 with a common differential feed network to apply signals to the first class of antenna elements 602 and operate them as an array. The first class of antenna elements 602 are configured for horizontal polarization and may be fed in the center and the axial area of the fuselage. The first class of antenna elements 602 may be HF, but meandering line dipoles can also be of higher frequency.

In at least one embodiment, switchable line length modulation may be employed to operate the first class of antenna elements 602 for NVIS tuning. Furthermore, a second class of antenna elements 604 (for example annular slot elements) may be disposed on one of the substantially parallel surfaces 600. The second class of antenna elements 604 may comprise UHF antennas 604 configured for vertical polarization; furthermore, a third class of antenna elements 606 (for example loop antenna elements) may also be disposed on the same substantially parallel surface 600, configured for UHF but vertical polarization.

In at least one embodiment, a fourth class of antenna elements 608, 610 are disposed on a different substantially parallel surface. The fourth class of antenna elements (for example bi-directional spiral elements) may be configured for operation in different frequency ranges; for example, the fourth set may include VHF bi-directional spiral antenna elements 608 and UHF bi-directional spiral antenna elements 610, each configured for vertical polarization. In at least one embodiment, spiral antenna elements 608, 610 are configured for ultra-wideband communication.

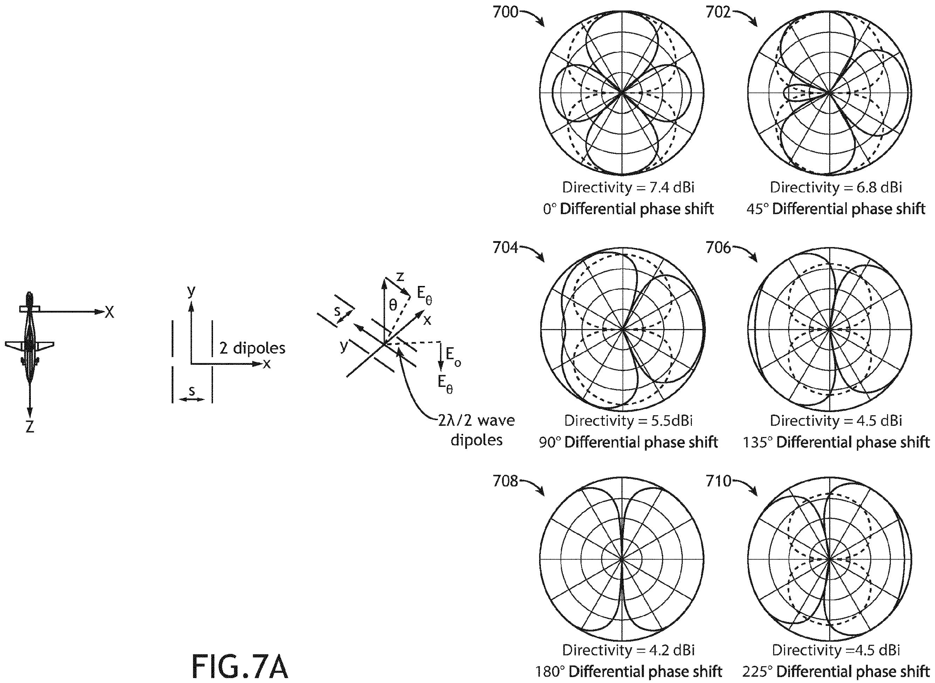

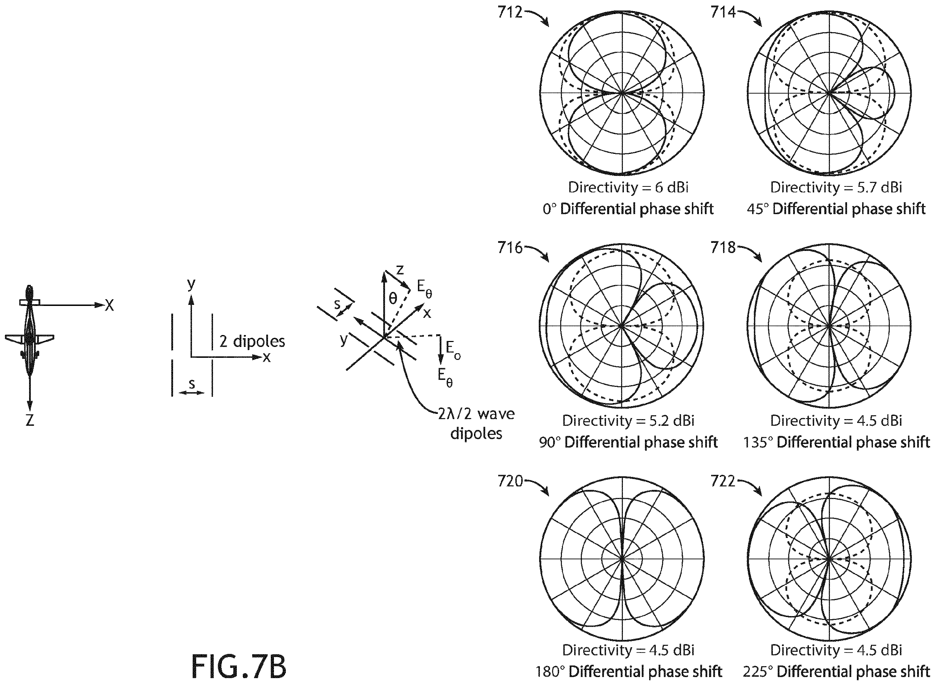

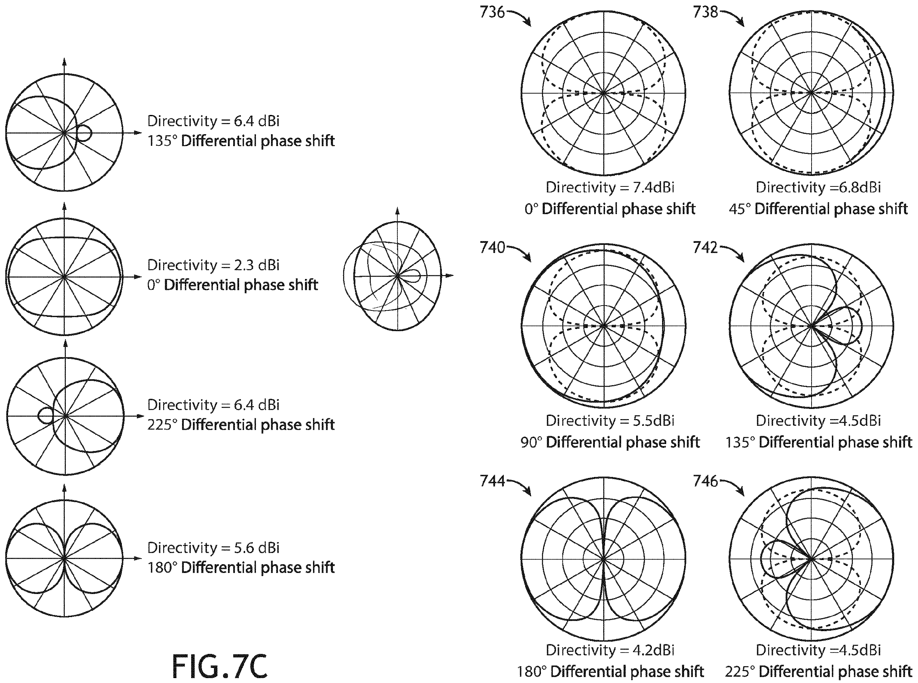

Referring to FIGS. 7A-7C, diagrams of radiation patterns produced limited element arrays disposed on aircraft panels according to an exemplary embodiment are shown. Where an aircraft includes two disparate antennas incorporated into certain substantially parallel body panels operated as an array, the array may be operated in a frequency range of about 400 MHz (as in FIG. 7A). Where the antennas are spaced approximately 50 cm apart, the antennas may produce a beam 700 with 7.4 dBi of directivity at 0° of differential phase shift; a beam 702 with 6.8 dBi of directivity at 45° of differential phase shift; a beam 704 with 5.5 dBi of directivity at 90° of differential phase shift; a beam 706 with 4.5 dBi of directivity at 135° of differential phase shift; a beam 708 with 4.2 dBi of directivity at 180° of differential phase shift; and a beam 710 with 4.5 dBi of directivity at 225° of differential phase shift (flipped as compared to the beam 706 at 135°). Likewise, and alternatively, the array may be operated in a frequency range of about 300 MHz (as in FIG. 7B). Where the antennas are spaced approximately 50 cm apart, the antennas may produce a beam 712 with 6 dBi of directivity at 0° of differential phase shift; a beam 714 with 5.7 dBi of directivity at 45° of differential phase shift; a beam 716 with 5.2 dBi of directivity at 90° of differential phase shift; a beam 718 with 4.5 dBi of directivity at 135° of differential phase shift; a beam 720 with 4.5 dBi of directivity at 180° of differential phase shift; and a beam 722 with 4.5 dBi of directivity at 225° of differential phase shift (flipped as compared to the beam 718 at 135°). Likewise, and alternatively, the array may be operated in a frequency range of about 100 MHz (as in FIG. 7C). Where the antennas are spaced approximately 50 cm apart, the antennas may produce a beam 736 with 2.3 dBi of directivity at 0° of differential phase shift; a beam 738 with 2.9 dBi of directivity at 45° of differential phase shift; a beam 740 with 4.5 dBi of directivity at 90° of differential phase shift; a beam 742 with 6.4 dBi of directivity at 135° of differential phase shift; a beam 744 with 5.6 dBi of directivity at 180° of differential phase shift; and a beam 746 with 6.4 dBi of directivity at 225° of differential phase shift (flipped as compared to the beam 718 at 135°). The limited arrays shown in FIGS. 7A-7C allow for modest beam directionality and nulling capability.

It may be appreciated that, while one specific UHF application is described with respect to FIG. 7, the concept may be generalized to other embodiments, e.g., DF phase-based interferometers, etc.

Historically electronic warfare systems have been segregated from comm systems, which exacerbate the antenna count and SWAP-C problems associated with limited real available area and low aerodynamic drag requirement of airborne platforms. Embodiments of the present disclosure enable integrated comm, electronic warfare, and radar applications such as foliage penetration.

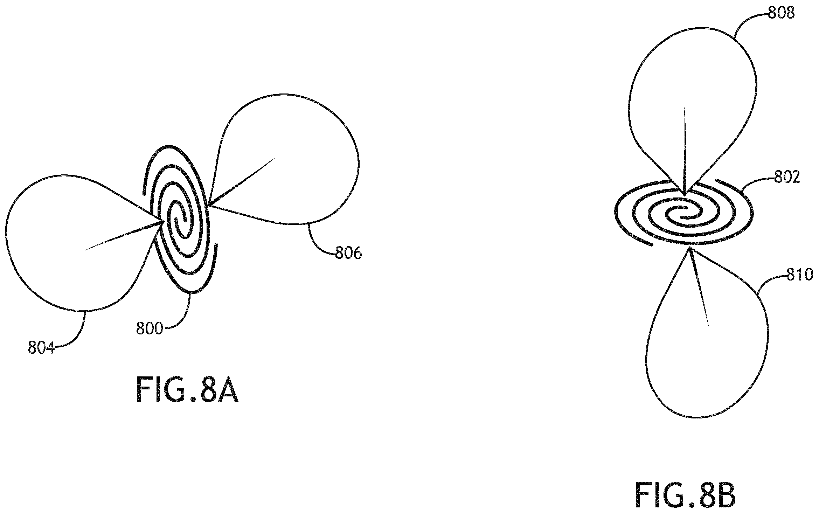

Referring to FIGS. 8A-8B, spiral antenna elements 800, 802 according to an exemplary embodiment are shown. In at least one embodiment, each spiral antenna element 800, 802 may be integrated into an aircraft body panel, and the spiral cavity may be backless (e.g., without ground plane) for bi-directional radiation with circular polarization. Spiral antenna elements 800, 802 may be extremely broadband as frequency is not limited by cavity backing that is otherwise required for unidirectional radiation. In some embodiments, spiral antenna elements 800, 802 are useful for interferometry and for ultra-wideband communications.

Spiral antenna elements 800, 802 may be disposed to produce horizontal cardioid end fire patters 804, 806 or disposed to produce vertical cardioid patters 808, 810. Horizontal cardioid end fire patters 804, 806 enable yaw plane or azimuth plane interferometry. Likewise, vertical cardioid end fire patters 808, 810 enable pitch plane or azimuth plane interferometry.

Directional spiral antenna elements 800, 802 enable air-to-ground and air-to-air direction finding / electronic support measures.

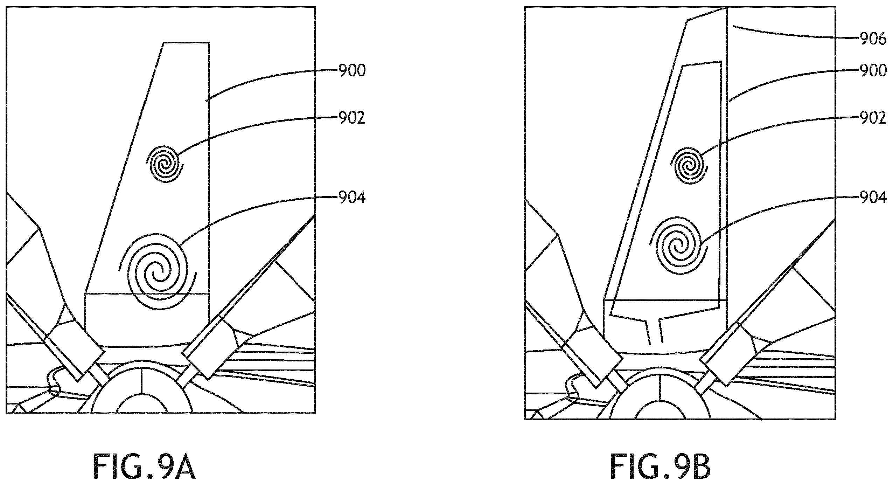

Referring to FIGS. 9A-9B, top views of aircraft panels 900 according to an exemplary embodiment are shown. Spiral antenna elements 902, 904 are disposed in an aircraft panel 900 for interferometry and communication. The spiral antenna elements 902, 904 may be configured for different frequency ranges via differently sized spirals; in at least one embodiment, at least one spiral antenna element 902, 904 is configured to operate in a frequency range centered on about 88 GHz. In at least one embodiment, the spiral antenna elements 902, 904 may be disposed inside an area defined by a high-frequency antenna element 906 also disposed in the aircraft panel 900.

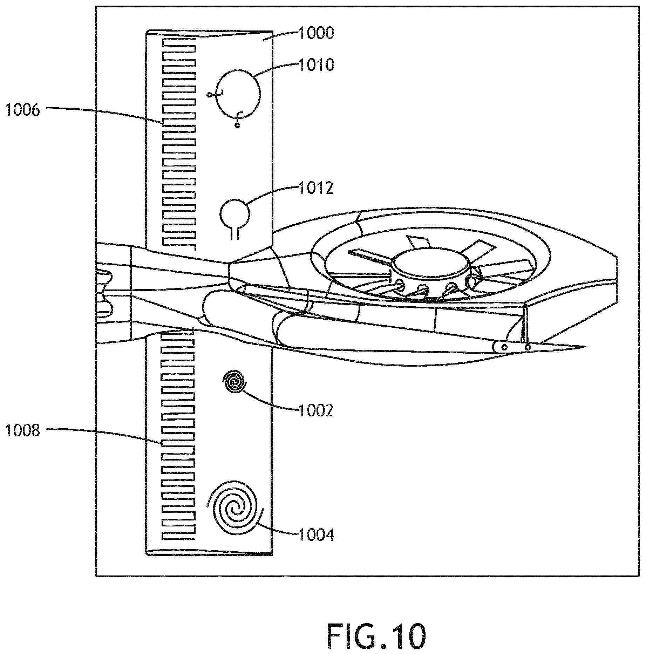

Referring to FIG. 10, a top view of aircraft panels 1000 according to an exemplary embodiment is shown. Spiral antenna elements 1002, 1004 are disposed in the aircraft panels 1000 for interferometry and communication. In at least one embodiment, the spiral antenna elements 1002, 1004 are disposed alongside alternative antenna elements 1006, 1008, 1010, 1012 configured for applications that may not be achievable by the spiral antenna elements 1002, 1004, or that have to operate at the same time and in a non-interfering frequency range. The spiral antenna elements 1002, 1004 may be separated from the alternative antenna elements 1006, 1008, 1010, 1012 according their operating frequency ranges to minimize mutual coupling or interference.

In at least one embodiment, the alternative antenna elements 1006, 1008, 1010, 1012 may comprise ultra-high frequency annular slot antennas 1010 configured for vertical polarization; ultra-high frequency loop antennas 1012 configured for horizontal polarization; and / or meandering dipole antennas 1006, 1008.

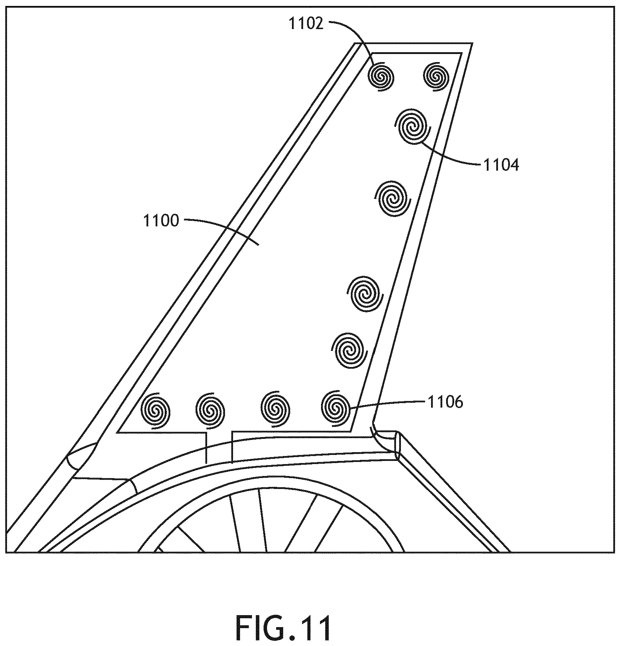

Referring to FIG. 11, a side view of an aircraft panel 1100 according to an exemplary embodiment is shown. The aircraft panel 1100, such as a vertical stabilizer, includes a plurality of spiral antenna elements 1102, 1104, 1106. Spiral antenna elements 1102, 1104, 1106 disposed in a vertical stabilizer are oriented to produce horizontal directed signals. In at least one embodiment, spiral antenna elements 1102 may be disposed along a top edge of the aircraft panel 1100 and configured for horizon-to-horizon interferometry. Likewise, spiral antenna elements 1106 may be disposed along a bottom edge of the aircraft panel 1100 and configured for horizon-to-horizon interferometry. Alternatively, or in addition, spiral antenna elements 1104 may be disposed along a trailing edge of the aircraft panel 1100 and configured for diagonal plane interferometry. Furthermore, staggering spiral antenna elements 1104, especially along the training edge, may realize pure vertical interferometry.

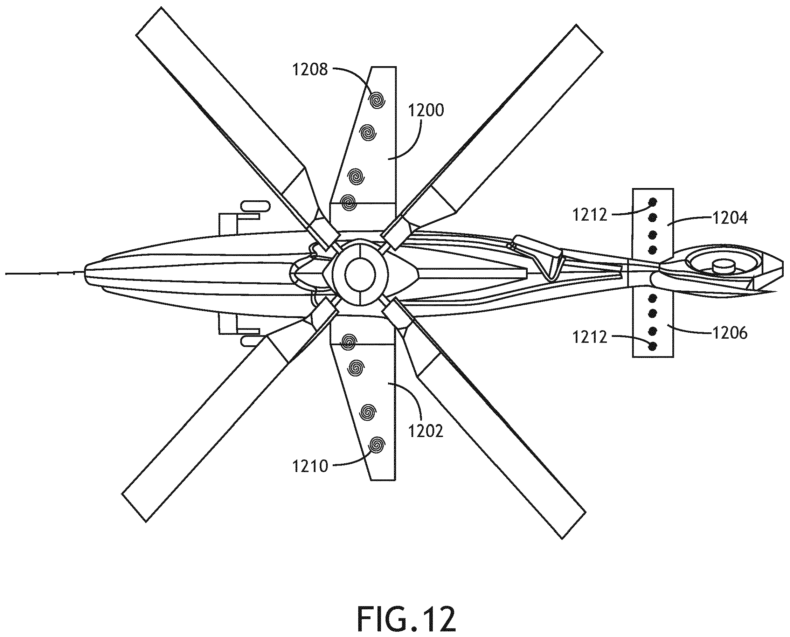

Referring to FIG. 12, a top view of an aircraft according to an exemplary embodiment is shown. Spiral antenna elements 1208, 1210, 1212 may be utilized in electronic support measures interferometry. Up / down interferometry may be realized via spiral antenna elements 1208, 1210, 1212 disposed on horizontal surfaces 1200, 1202, 1204, 1206. Such spiral antenna elements 1208, 1210, 1212 may be operated as an array, either specific to a corresponding horizontal surface 1200, 1202, 1204, 1206 or across multiple horizontal surfaces 1200, 1202, 1204, 1206.

Interferometric arrays that utilized spiral antenna elements 1208, 1210, 1212 (i.e., 10 different arrays) may be spaced according to an intended operating frequency range; for example, spiral antenna elements 1208, 1210, 1212 may be spaced five wavelengths, nine wavelengths, and 13.6 wavelengths from neighboring spiral antenna elements 1208, 1210, 1212; in another exemplary embodiment, two elements may have half wavelength spacing.

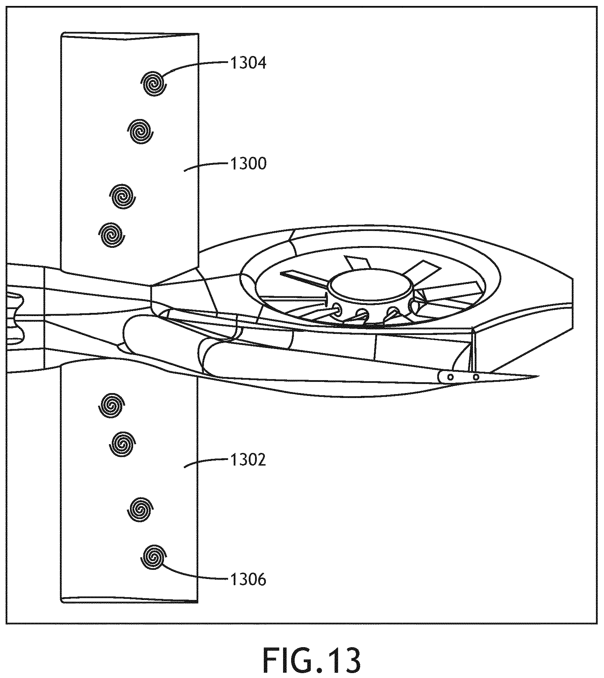

Referring to FIG. 13, a top view of aircraft panels 1300, 1302 according to an exemplary embodiment is shown. The aircraft panels 1300, 1302 include spiral antenna elements 1304, 1306 that may be configured for bi-directional interferometry or communications. In at least one embedment, the spiral antenna elements 1304, 1306 may be spaced from each other according to application and operating frequency; furthermore, the spiral antenna elements 1304, 1306 may be staggered.

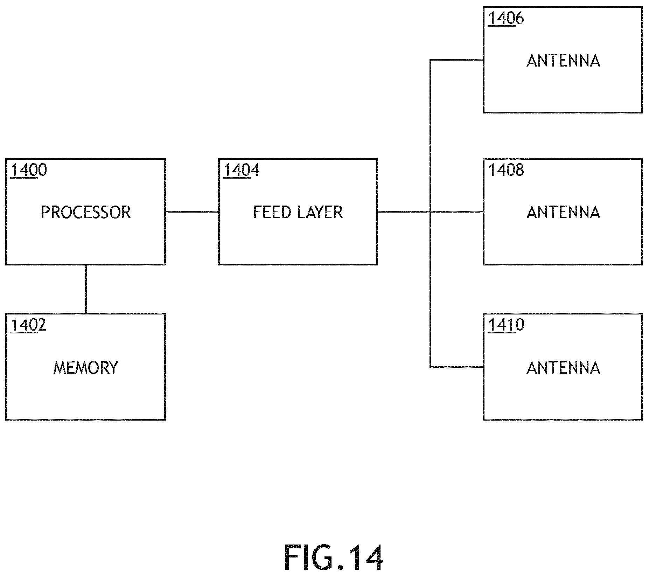

Referring to FIG. 14, a block diagram of a system according to an exemplary embodiment is shown. The system includes at least one processor 1400 in data communication with a memory 1402 for storing non-transitory processor executable code. The processor 1400 applies signals to a radiating element feed network 1404 that further applies signals to a plurality of spiral antenna elements 1406, 1408, 1410. The signals configure the spiral antenna elements 1406, 1408, 1410 for various signal applications including interferometry and communications. In at least one embodiment, the signals configure the spiral antenna elements 1406, 1408, 1410 via phase shift to produce radiation patterns for beam directionality. In at least one embodiment, spiral antenna elements 1406, 1408, 1410 may be disposed in separate body panels of an aircraft and operated as an array across those panels.

In at least one embodiment, a first set of spiral antenna elements 1406 are disposed on a horizontal surface of an aircraft and a second set of spiral antenna elements 1408 are disposed on a vertical surface of the aircraft. The first set of spiral antenna elements 1406 are configured for air-to-ground interferometry while the second set of spiral antenna elements 1408 are configured for air-to-air, air-to-ground, and ground -to-ground interferometry, as CONOPS dictate. Furthermore, a third set of spiral antenna elements 1410, disposed on horizontal surfaces, vertical surfaces, or both, are configured for communications.

While specific embodiment described herein are directed toward communication and direction-finding Interferometry, it may be appreciated that embodiments are also useful for UHF foliage penetration radar (FOPEN).

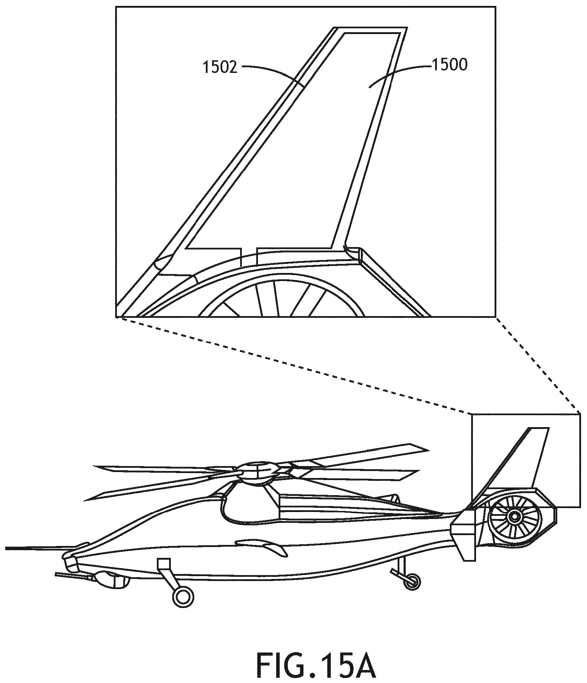

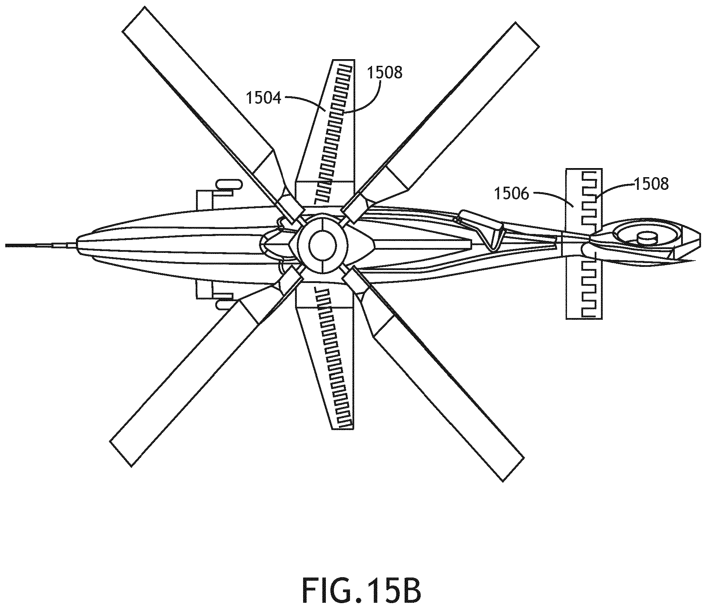

Referring to FIGS. 15A-1B, side and top views of an aircraft according to an exemplary embodiment are shown. Vertical surfaces 1500 such as vertical stabilizers include an incorporated antenna 1502. Likewise, horizontal surfaces 1504, 1506 such as winglets 1504 and horizontal stabilizers 1506 include incorporated antennas 1508. In at least one embodiment, the vertical surface antenna 1502 is configured, physically or electronically, for vertical polarization while the horizontal surface antennas 1508 are configured, physically or electronically, for horizontal polarization.

NVIS HF propagation is known to have both horizontal and vertical polarization attributes as dictated by sunspot / ionosphere physics. NVIS propagation / polarization is a function of sunspot cycles, transmit and receive launch angle, time of day, etc. Multi-polarization optimizes NVIS HF wave coupling for any instant conditions.

As an example of how these surfaces applies to HF, winglets 1504 may be approximately two-hundred thirteen centimeters (seven feet), or about ½ a wavelength at seventy MHz or about ¼ wavelength at thirty MHz. Two winglets 1504 in tandem each represent a ½ dipole arm. Antenna meandering, foreshortening, or reactive loading may enable HF NVIS. Some embodiments may effectively double fuselage surface area available for HF NVIS antennas by coupling across pairs of winglets 1504.

In at least one embodiment, the vertical surface 1500 may be vertically polarized via electrically small loop antennas, electric-magnetic antennas to maximize Wheeler-Chu volume, warp-around spirals, low power reactively tuned Structures, etc. Alternatively, the vertical surface 1500 may be horizontally polarized via UWB slot antennas. Winglets 1504 may be vertically polarized via vertical oriented concatenated reactive / ferrite loaded loops, bi-directional spiral antennas, dipole antennas, slot antennas, etc. where two winglet structures are connected. Alternatively, the winglets 1504 may be horizontally polarized via printed planar UWB bicone antennas. meandered line antennas, helically loaded dipole antennas, low power reactively tuned structures, reconfigurable metallic patches or facets, etc.

In at least one embodiment, the vertical surface antenna 1502 is a lumped reactive foreshortening non-meandered loop element and is integrated into the panel defining the vertical surface 1500. Ferrite / material loading is possible.

In at least one embodiment, the antennas 1502, 1508 may be disposed on the corresponding surfaces 1500, 1504, 1506. Alternatively, the antennas 1502, 1508 may be incorporated into the body panels, including corresponding isolation layers and insulating layers.

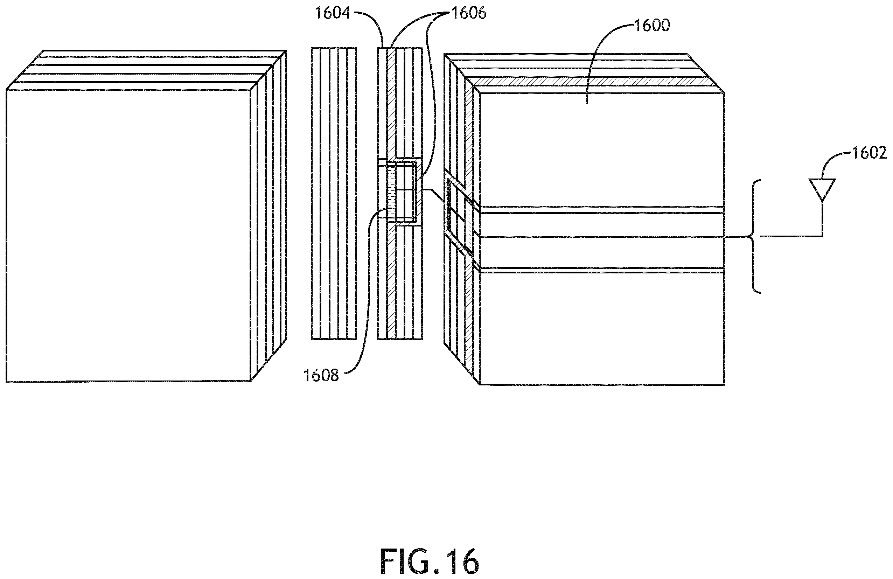

Referring to FIG. 16, a detail, cross-sectional view of a panel 1600 with an embedded HF antenna 1602 according to an exemplary embodiment is shown. Panels 1600 for a mobile platform such as an aircraft may comprise a composite of a plurality of layers 1604, 1606, 1608. A top, insulating layer 1604 overlays a lightning strike protection layer 1606. The lightning strike protection layer 1606 may interfere with signals to and from an antenna layer 1606; therefore, where there is a separate antenna layer 1606, the lightning strike protection layer 1606, while still continuous, may recess beneath the antenna layer 1606. The antenna layer 1606 and an overlaying insulating layer 1604 are thereby disposed flush with the surrounding insulating layer 1604, and the embedded HF antenna 1602 does not add additional drag to the aircraft in spite of the large overall size of the embedded HF antenna 1602.

In at least one embodiment, the lightning strike protection layer 1606 may comprise a portion of the embedded HF antenna 1602. Conformal antennas may be created / embedded within the structural composite's screen mesh with lightening arrestment maintained within the panels. Lightning arrestment may be maintained by choking or surface currents trapping. The HF antenna can in principal be co-designed/integrated with the lightning arrestment panel/current suppression circuits. The HF antenna can be dual purposed to also provide lightning immunity.

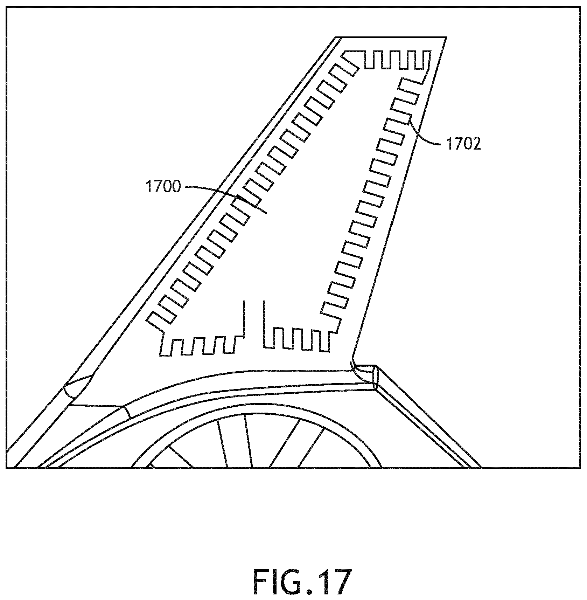

Referring to FIG. 17, a detail view of an aircraft panel 1700 according to an exemplary embodiment is shown. The panel 1700 includes an integrated lumped reactive foreshortening meandered element 1702 (ferrite / material loading is possible). Feed elements or internal switches may enable switchable line length moderation for NVIS band tuning.

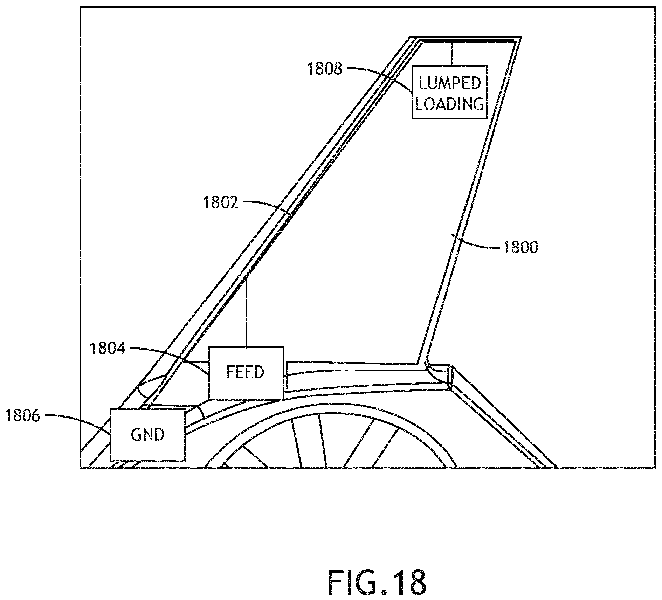

Referring to FIG. 18, a detail view of an aircraft panel according to an exemplary embodiment is shown. The panel 1800 includes an antenna element 1802 comprising an inverted F antenna with nonplanar ground 1806. The antenna element can be meandered, line length switched, or lumped reactive loaded; these details are not shown in the simple sketch of figure 18. Feed elements 1804 or internal switches may enable switchable line length moderation for NVIS band tuning. In at least one embodiment, a lumped loading reactive foreshortening element 1808 may be included to increase inductance or for impedance matching and tuning.

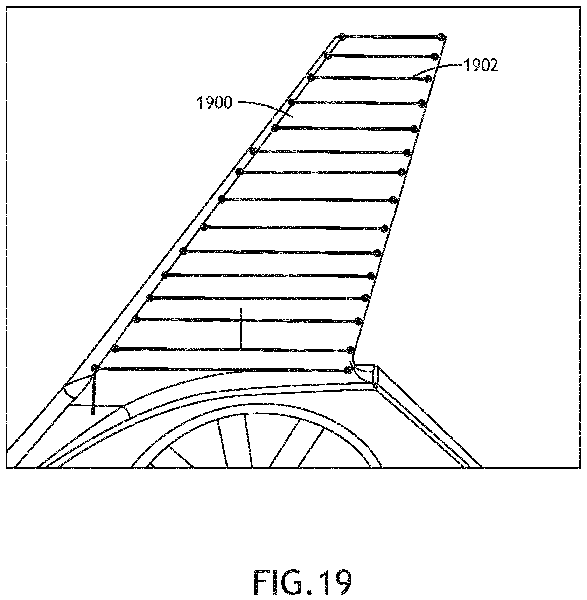

Referring to FIG. 19, a detail view of an aircraft panel according to an exemplary embodiment is shown. The panel 1900 includes a distorted helical monopole antenna element 1902. A high aspect ratio rectangular element is wrapped around or wrapped within the panel 1900. The helix is either integrated during panel fabrication or implemented as an aerodynamically robust conformal blanket for post build installation.

In at least one embodiment, a lumped reactive foreshortening element may be integrated into the structure. Ferrite / material loading and switchable line length moderation for NVIS Band tuning is also envisioned.

Embodiments of the present disclosure may enable electronically switched in polarization for functionality to optimize wave coupling to compensate for NVIS propagation polarization fluctuations. Tactical NVIS comm link may be designed to preclude the need for antenna couplers and high output power amplifiers. Various functional aspects of the system may be maximized, including the volume of the ESA in accordance ESA theory, Wheeler-Chu limits, etc. Antenna shapes / structures may be adapted to be compatible with structural, environmental, and material constraints.

While specific embodiments have referred to HF frequency bands and NVIS, the principles and antenna systems are applicable to other frequency bands, especially VHF, UHF and L-band frequencies, as these are prime candidates for structural integration for drag reduction.

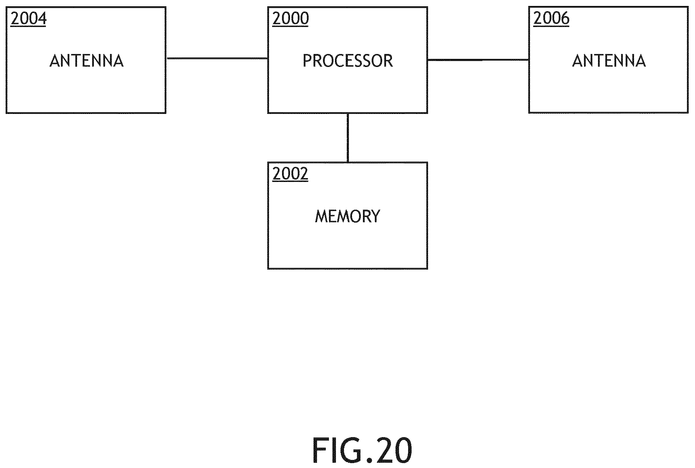

Referring to FIG. 20 a block diagram of a system useful for implementing exemplary embodiments is shown. The system includes a processor 2000 and at least two antennas 2004, 2006 having orthogonal polarization with respect to each other. The processor 2000 may comprise a hardware defined processing element, field programmable gate array, general purpose processor configured via processor executable code stored in a memory 2002, etc. In at least one embodiment, the processor 2000 includes an RF transceiver which includes both the HF transmit and receive signal chains, including power amplifiers (PA), low-noise amplifiers (LNA) and analog-to-digital up and down conversion elements. In at least one embodiment, the processor receives signals from a first antenna 2004 of arbitrary polarization, and signals from a second antenna 2006 of orthogonal polarization with respect to the first antenna 2004.

In at least one embodiment, the processor 2000 performs signal strength analysis on the orthogonally polarized signals to identify which polarization is currently receiving the strongest signal, and utilize the antenna 2004, 2006 that receives the strongest instant at any time instant. Such signal strength analysis may be performed substantially continuously to always ensure the strongest signal is being utilized. Alternatively, signal strength analysis may be performed periodically.

In at least one embodiment, orthogonal signals from the antennas 2004, 2006 are continuously carried in separate, parallel channels. The processor 2000 may perform digital signal processing on each channel and combine the output according to some resolution algorithm. Alternatively, some signal verification algorithm may be employed to verify the orthogonal signals against each other before digital signal processing.

In at least one embodiment, orthogonal signals in separate channels may be employed during transmission to generate circularly polarized signals.

Embodiment described herein have focused on horizontal polarization and vertical polarization, however it may be appreciated that any orthogonal polarization may be employed.

In at least one embodiment, an optimal polarization state for both transmission and reception (for example, horizonal, vertical, or circular) may be identified using Ionospheric propagation prediction models executed by the processor 2000, or by some other processing element embedded into a transceiver digital signal processor, or by performing a transmit and receive polarization rotation signal search based on amplitude or phase or both. Alternatively, or in addition, a multi-step search algorithm may comprise an initial polarization rotation search based on computer predictions and then a signal-to-noise ratio, optimized through a real-time polarization rotation measurement search.

In at least one embodiment, the antennas 2004, 2006 may comprise characteristic mode current transducers that excite radiating surface currents on an aircraft. The aircraft's structural surface may be partitioned to be excited with a characteristic mode current transducer sub-aerostructure designed for a given polarization state, and a second characteristic mode current transducer sub-aerostructure designed for an orthogonal polarization state.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts as defined by the appended claims or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. A system of antennas comprising:
an aircraft body panel;
a high-frequency, HF, antenna loop disposed in the aircraft body panel; a plurality of higher frequency
antenna elements, each disposed inside the HF antenna loop in the aircraft body panel;
a feed network (1404) configured to drive each of the plurality of antenna elements and
at least one processor (1400) connected to the feed network and a memory storing processor executable code,
wherein:
the plurality of antenna elements are configured for interferometry and communications; and
the processor executable code configures the at least one processor to determine signals to apply to the feed network to configured the plurality of antenna elements as an array.

2. The system of antennas of Claim 1, wherein each of the plurality of higher frequency antenna elements are cavity backless spiral antenna elements (1002, 1004).

3. The system of antennas of Claim 2, wherein a first set of antenna elements in the plurality of antenna elements and a second set of antenna elements in the plurality of antenna elements are disposed orthogonally.

4. The system of antennas of Claim 2, wherein the at least one processor (1400) is further configured to:
apply signals to the feed network to operate a first set of antenna elements in the plurality of antenna elements for communication; and
simultaneously apply signals to the feed network to operate a second set of antenna elements in the plurality of antenna elements for interferometry.

5. The system of antennas of Claim 2, wherein the at least one processor (1400) is further configured to apply signals to the feed network to configure the antenna elements for horizon-to-horizon interferometry.

6. The system of antennas of Claim 1, wherein:
a first antenna in the plurality of antenna elements is configured for a first polarization and
a second antenna in the plurality of antenna elements is configured for a second polarization.

7. The system of antennas of Claim 6, wherein:
the first polarization comprises a right-handed circular polarization; and
the second polarization comprises a left-handed circular polarization.

8. The system of antennas of Claim 6, wherein the at least two antennas comprise HF meandered loops.

9. The system of antennas of Claim 6, wherein the at least two antennas comprise sloped monopoles.

10. The system of antennas of Claim 6, wherein the at least two antennas comprise distorted helical monopoles.

11. The system of antennas of Claim 6, wherein:
the first polarization comprises a horizontal polarization; and
the second polarization comprises a vertical polarization.

12. A system comprising:
at least two aircraft body panels, each comprising a high-frequency, HF, antenna loop and at least one higher frequency antenna disposed inside the HF antenna loop;
a common feed network (1404) configured to drive each antenna of the at least two body panels; and
at least one processor (1400) connected to the common feed network and a memory for storing processor executable code,
wherein:
a first body panel antenna is configured for a first polarization; and
a second body panel antenna is configured for a second polarization.

13. The system of Claim 12, wherein the processor (1400) is configured via processor executable code stored in the memory to:
produce a first signal in a first channel associated with the first body panel antenna;
produce a second signal in a second channel associated with the second body panel antenna; and
produce a circularly polarized signal via a combination of the first signal and the second signal.

14. The system of Claim 12 or 13, wherein the at least two antennas comprise characteristic mode transducers configured and disposed to induce radiating surface currents in the corresponding first body panel antenna and second body panel antenna.

15. The system of any of Claims 12-14, wherein the at least one processor (1400) is configured to:
execute a predictive polarization algorithm to identify a preliminary polarization channel;
receive a first signal via the first body panel antenna;
receive a second signal via the second body panel antenna;
calculate a signal-to-noise ratio for each of the first signal and second signal;
compare the signal-to-noise ratios to identify a superior polarization channel; and
compare the superior polarization channel to the preliminary polarization channel.

## Patentansprüche

1. Antennensystem, umfassend:
eine Flugzeugkarosserieplatte;
eine Hochfrequenz-HF-Antennenschleife, die in der Flugzeugkarosserieplatte angeordnet ist;
eine Vielzahl von Antennenelementen mit höherer Frequenz, die jeweils innerhalb der HF-Antennenschleife in der Flugzeugkarosserieplatte angeordnet sind;
ein Speisenetzwerk (1404), das so konfiguriert ist, dass es jedes der Vielzahl von Antennenelemente ansteuert; und
mindestens einen Prozessor (1400), der mit dem Speisenetzwerk und einem Speicher verbunden ist, der einen vom Prozessor ausführbarer Code speichert,
wobei:
die Vielzahl von Antennenelemente für Interferometrie und Kommunikation konfiguriert sind; und
der ausführbare Code des Prozessors konfiguriert den mindestens einen Prozessor, um Signale zu bestimmen, die an das Speisenetzwerk angewendet werden sollen, um die Vielzahl von Antennenelemente als Array zu konfigurieren.

2. Das Antennensystem nach Anspruch 1, wobei jedes der Vielzahl von Antennenelemente mit höherer Frequenz hohlraumfreie Spiralantennenelemente (1002, 1004) sind.

3. Das Antennensystem nach Anspruch 2, wobei ein erster Satz von Antennenelemente in der Vielzahl von Antennenelementen und ein zweiter Satz von Antennenelementen in der Vielzahl von Antennenelementen orthogonal angeordnet sind.

4. Das Antennensystem nach Anspruch 2, wobei der mindestens eine Prozessor (1400) ferner so konfiguriert ist, dass er:
Signale an das Speisenetzwerk anlegt, um einen ersten Satz von Antennenelemente in der Vielzahl von Antennenelementen für die Kommunikation zu betreiben; und
gleichzeitig Signale an das Speisenetzwerk anlegt, um einen zweiten Satz von Antennenelemente in der Vielzahl von Antennenelementen für die Interferometrie zu betreiben.

5. Das Antennensystem nach Anspruch 2, wobei der mindestens eine Prozessor (1400) ferner so konfiguriert ist, dass er Signale an das Speisenetzwerk anlegt, um die Antennenelemente für eine Horizont-zu-Horizont-Interferometrie zu konfigurieren.

6. Das Antennensystem nach Anspruch 1, wobei:
eine erste Antenne in der Vielzahl von Antennenelemente für eine erste Polarisation konfiguriert ist; und
eine zweite Antenne in der Vielzahl von Antennenelemente für eine zweite Polarisation konfiguriert ist.

7. Das Antennensystem nach Anspruch 6, wobei:
die erste Polarisation eine rechtsdrehende zirkulare Polarisation umfasst; und
die zweite Polarisation eine linksdrehende zirkulare Polarisation umfasst.

8. Das Antennensystem nach Anspruch 6, wobei die mindestens zwei Antennen HF-Mäander-Schleifen umfassen.

9. Das Antennensystem nach Anspruch 6, wobei die mindestens zwei Antennen geneigte Monopole umfassen.

10. Das Antennensystem nach Anspruch 6, wobei die mindestens zwei Antennen verzerrte spiralförmige Monopole umfassen.

11. Das Antennensystem nach Anspruch 6, wobei:
die erste Polarisation eine horizontale Polarisation umfasst; und
die zweite Polarisation eine vertikale Polarisation umfasst.

12. Ein System, das Folgendes umfasst:
mindestens zwei Flugzeugkarosserieplatte, die jeweils eine Hochfrequenz-HF-Antennenschleife und mindestens eine Antenne mit höherer Frequenz umfassen, die innerhalb der HF-Antennenschleife angeordnet ist;
ein gemeinsames Speisenetzwerk (1404), das so konfiguriert ist, dass es jede Antenne der mindestens zwei Karosserieteile ansteuert; und
mindestens einen Prozessor (1400), der mit dem gemeinsamen Speisungsnetzwerk verbunden ist, und einen Speicher zum Speichern von ausführbarem Code für den Prozessor,
wobei:
eine erste Karosserieteilantenne für eine erste Polarisation konfiguriert ist; und
eine zweite Karosserieteilantenne für eine zweite Polarisation konfiguriert ist.

13. Das System gemäß Anspruch 12, wobei der Prozessor (1400) über im Speicher gespeicherten, vom Prozessor ausführbaren Code so konfiguriert ist, dass er:
ein erstes Signal in einem ersten Kanal erzeugt, der ersten Karosserieantenne zugeordnet ist;
ein zweites Signal in einem zweiten Kanal erzeugt, der zweiten Karosserieantenne zugeordnet ist; und
ein zirkular polarisiertes Signal über eine Kombination des ersten Signals und des zweiten Signals erzeugt.

14. Das System nach Anspruch 12 oder 13, wobei die mindestens zwei Antennen Merkmal-Modenwandler umfassen, die so konfiguriert und angeordnet sind, dass sie Oberflächenströme in der entsprechenden ersten Karosserieantenne und zweiten Karosserieantenne induzieren.

15. Das System nach einem der Ansprüche 12 bis 14, wobei der mindestens eine Prozessor (1400) so konfiguriert ist, dass er:
einen prädiktiven Polarisationsalgorithmus ausführt, um einen vorläufigen Polarisationskanal zu identifizieren;
ein erstes Signal über die erste Karosserieantenne empfängt;
ein zweites Signal über die zweite Karosserieantenne empfängt;
ein Signal-Rausch-Verhältnis für jedes der ersten und zweiten Signale berechnet;
die Signal-Rausch-Verhältnisse zu vergleichen, um einen überlegenen Polarisationskanal zu identifizieren; und
den überlegenen Polarisationskanal mit dem vorläufigen Polarisationskanal zu vergleichen.

## Revendications

1. Système d'antennes comprenant :
un panneau de fuselage d'aéronef ;
une boucle d'antenne haute fréquence, HF, disposée dans le panneau de fuselage d'aéronef ;
une pluralité d'éléments d'antenne à fréquence plus élevée, chacun disposé à l'intérieur de la boucle d'antenne HF dans le panneau de fuselage d'aéronef ;
un réseau d'alimentation (1404) configuré pour piloter chacun de la pluralité d'éléments d'antenne ; et
au moins un processeur (1400) connecté au réseau d'alimentation et une mémoire stockant le code exécutable du processeur,
dans lequel :
la pluralité d'éléments d'antenne sont configurés pour l'interférométrie et les communications ; et
le code exécutable du processeur configure l'au moins un processeur pour déterminer les signaux à appliquer au réseau d'alimentation pour configurer la pluralité d'éléments d'antenne sous forme de réseau.

2. Système d'antennes selon la revendication 1, dans lequel chacun de la pluralité d'éléments d'antenne à fréquence plus élevée est constitué d'éléments d'antenne en spirale sans dos à cavité (1002, 1004).

3. Système d'antennes selon la revendication 2, dans lequel un premier ensemble d'éléments d'antenne dans la pluralité d'éléments d'antenne et un second ensemble d'éléments d'antenne dans la pluralité d'éléments d'antenne sont disposés orthogonalement.

4. Système d'antennes selon la revendication 2, dans lequel l'au moins un processeur (1400) est également configuré pour :
appliquer des signaux au réseau d'alimentation pour faire fonctionner un premier ensemble d'éléments d'antenne dans la pluralité d'éléments d'antenne pour la communication ; et
appliquer simultanément des signaux au réseau d'alimentation pour faire fonctionner un second ensemble d'éléments d'antenne dans la pluralité d'éléments d'antenne pour l'interférométrie.

5. Système d'antennes selon la revendication 2, dans lequel l'au moins un processeur (1400) est également configuré pour appliquer des signaux au réseau d'alimentation afin de configurer les éléments d'antenne pour l'interférométrie horizon à horizon.

6. Système d'antennes selon la revendication 1, dans lequel :
une première antenne dans la pluralité d'éléments d'antenne est configurée pour une première polarisation ; et
une seconde antenne dans la pluralité d'éléments d'antenne est configurée pour une seconde polarisation.

7. Système d'antennes selon la revendication 6, dans lequel :
la première polarisation comprend une polarisation circulaire droite ; et
la seconde polarisation comprend une polarisation circulaire gauche.

8. Système d'antennes selon la revendication 6, dans lequel les au moins deux antennes comprennent des boucles sinueuses HF.

9. Système d'antennes selon la revendication 6, dans lequel les au moins deux antennes comprennent des monopôles inclinés.

10. Système d'antennes selon la revendication 6, dans lequel les au moins deux antennes comprennent des monopôles hélicoïdaux déformés.

11. Système d'antennes selon la revendication 6, dans lequel :
la première polarisation comprend une polarisation horizontale ; et
la seconde polarisation comprend une polarisation verticale.

12. Système comprenant :
au moins deux panneaux de fuselage d'aéronef, chacun comprenant une boucle d'antenne haute fréquence, HF, et au moins une antenne à fréquence plus élevée disposée à l'intérieur de la boucle d'antenne HF ;
un réseau d'alimentation commun (1404) configuré pour piloter chaque antenne des au moins deux panneaux de fuselage ; et
au moins un processeur (1400) connecté au réseau d'alimentation commun et une mémoire pour stocker le code exécutable du processeur,
dans lequel :
une première antenne de panneau de fuselage est configurée pour une première polarisation ; et
une seconde antenne de panneau de fuselage est configurée pour une seconde polarisation.

13. Système selon la revendication 12, dans lequel le processeur (1400) est configuré via un code exécutable de processeur stocké dans la mémoire pour :
produire un premier signal dans un premier canal associé à la première antenne de panneau de fuselage ;
produire un second signal dans un second canal associé à la seconde antenne de panneau de fuselage ; et
produire un signal polarisé circulairement via une combinaison du premier signal et du second signal.

14. Système selon la revendication 12 ou 13, dans lequel les au moins deux antennes comprennent des transducteurs de mode caractéristiques configurés et disposés pour induire des courants de surface rayonnants dans la première antenne de panneau de fuselage et la seconde antenne de panneau de fuselage correspondantes.

15. Système selon l'une quelconque des revendications 12 à 14, dans lequel l'au moins un processeur (1400) est configuré pour :
exécuter un algorithme de polarisation prédictive pour identifier un canal de polarisation préliminaire ;
recevoir un premier signal via la première antenne de panneau de fuselage ;
recevoir un second signal via la seconde antenne de panneau de fuselage ;
calculer un rapport signal sur bruit pour chacun du premier signal et du second signal ;
comparer les rapports signal sur bruit pour identifier un canal de polarisation supérieur ; et
comparer le canal de polarisation supérieur au canal de polarisation préliminaire.
